# EUROPÄISCHE PATENTANMELDUNG

(11) **EP 0 608 662 A1**
(43) Veröffentlichungstag der Anmeldung: **03.08.1994**
(21) Anmeldenummer: 93810917.0
(22) Anmeldetag: 30.12.1993
(51) Int. Cl.: A61C 3/16

(54) **Verfahren und Vorrichtung zum zerstörungsfreien Abziehen oder Entfernen von Zahnkronen**

(30) Priorität: 28.01.1993 CH 246/93
(71) Anmelder: A.T.D.-ANDREW TECHNIQUE ET DIFFUSION, F-67100 Strasbourg (FR)
(72) Erfinder: Frei, Siegfried, CH-9053 Teufen (CH)
(74) Vertreter: Poncet, Jean-François

(57) **Zusammenfassung**

Das erfindungsgemäss Verfahren sieht vor, dass auf der zu entfernenden Zahnkrone (1) seitlich je ein Halteplättchen (3) befestigt wird. Die Befestigung des Halteplättchens (3) an der Zahnkrone (1) erfolgt durch einen Kleber (5), der sehr rasch aushärtet. Vorzugsweise besteht das Halteplättchen (3) aus einem lichtdurchlässigen Kunststoff, z.B. Polykarbonat, und es wird ein UV-härtender Kleber (5) verwendet. Die Befestigung des Plättchens (3) erfolgt dann durch kurzfristige Beleuchtung der Klebestelle mit UV-Licht. An den beiden Halteplättchen (3) wird ein Zugkabel (9), das zu einer Doppelschlinge geformt ist, eingehängt und die Zahnkrone (1) mittels eines Instrumentes, z.B. einem Hirtenstab, abgezogen. Die an der Zahnkrone (1) befestigten Halteplättchen (3) können anschliessend durch eine entsprechende, auch den Kleber (5) lösende Flüssigkeit von der Oberfläche der Zahnkrone (1) abgenommen werden. Eine Wiederverwendung der Zahnkrone (1) ist damit möglich.

## Beschreibung

Die Erfindung betrifft ein Verfahren und eine Vorrichtung zum zerstörungsfreien Abziehen oder Entfernen von Zahnkronen gemäss Oberbegriff des Patentanspruches 1.

Zahnkronen aus Metall oder einem Metall-Keramikverbund müssen bei Defekten, Abnutzung oder bei Entzündung des Zahnfleisches oder Defekt des Unterbaus (Präparation) von letzterem abgenommen werden.

Es ist bekannt, die Kronen mittels Instrumenten abzuziehen, an deren Ende ein kleines Häkchen angebracht ist, das zwischen das Zahnfleisch und die Krone bis zu deren Basis eingeführt wird, bis dieses an der Unterkante der Krone eingehängt werden kann. Mittels eines auf der Abzugsvorrichtung, auch Zugstange oder Hirtenstab genannt, längs verschiebbaren Gewichtes, welches gegen das dem Haken gegenüberliegende Ende der Abzugsvorrichtung geschlagen wird, kann die Krone von der Präparation gelöst werden. Diese bekannte Vorrichtung hat den Nachteil, dass das Einführen des Hakens unter den Rand der Krone sehr schmerzhaft ist, das zur Seite gedrängte Zahnfleisch in den meisten Fällen verletzt und zudem eine Infektion ausgelöst werden kann. Im weiteren wird der sehr dünne Rand der Krone - dessen Dicke beträgt nur etwa 0,2 mm - durch die Schläge vom Haken örtlich beschädigt. Eine Reparatur durch den Zahntechniker wird folglich nötig.
Das bekannte Instrument ermöglicht zudem nur einen einseitigen Kraftangriff, so dass der Zahnersatz nicht axial von der Präparation abgezogen, sondern von dieser einseitig abgehoben und verschwenkt wird, was einerseits einen höheren Kraftaufwand hervorruft und den Zahnersatz zusätzlicher Beanspruchung und oft Verformung unterwirft. Durch diese Massnahmen entstehen Beschädigungen nicht nur am Kronenrand, sondern auch am keramischen Überzug und der Präparation, deren Behebung entweder sehr kostspielig ist oder die Anfertigung einer neuen Zahnkrone erfordert.

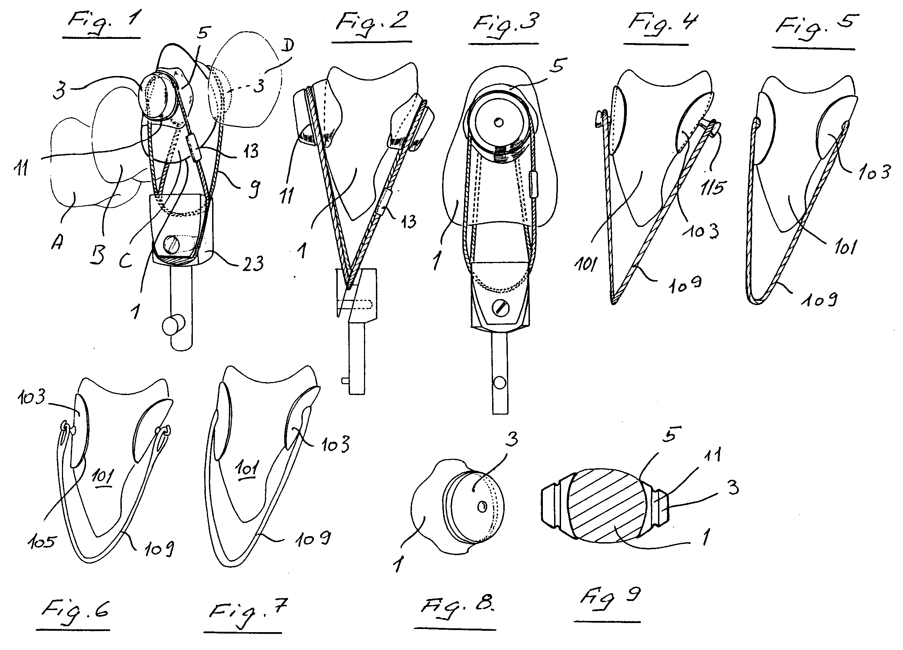

Aus der EP-A-0471648 ist weiter eine Vorrichtung zum Abziehen von insbesondere Zahnkronenbrücken bekannt. Bei dieser Vorrichtung wird eine Drahtschlaufe unter der Verbindungsstelle zweier benachbarter Zahnkronen hindurchgeführt. Diese Vorrichtung kann allerdings nur dann eingesetzt werden, wenn mehrere Zahnkronen, die zudem miteinander verbunden sein müssen, verwendet werden. Eine einzelne Zahnkrone liesse sich dort allenfalls mit der aus drei Backen bestehenden Zange gemäss Figur 1 in im wesentlichen herkömmlicher Weise abziehen.

Hier will die Erfindung Abhilfe schaffen.
Die Erfindung, wie sie in Anspruch 1 gekennzeichnet ist, löst die Aufgabe, ein Verfahren zu schaffen, mit dem eine Zahnkrone abgezogen werden kann. Die Erfindung, wie sie in Anspruch 5 gekennzeichnet ist, löst die Aufgabe, eine Vorrichtung zu schaffen, mit der eine Zahnkrone abgezogen werden kann.

Es gelingt mit dem erfindungsgemässen Verfahren und der Vorrichtung, die zu entfernenden Kronen derart zu ergreifen, dass beim Abziehen keine Beschädigungen entstehen und eine Wiederverwendung ohne vorangehende Reparatur möglich wird.
Die Abzugsvorrichtung kann auf die herkömmlichen Zugstangen oder Hirtenstäbe aufgesetzt und benutzt werden; sie kann aber auch mittels aller herkömmlicher Abziehhaken erfasst werden.
Die beiden Halteplättchen können in einfacher Weise mittels eines schlagunempfindlichen Klebers, der durch eine UV-Lichtquelle härtbar ist, an den Seitenflächen der zu entfernenden Krone befestigt werden. An den an der Krone befestigten Plättchen können nun zwei Drahtschlaufen eingehängt werden, mittels welchen die Krone mühelos von der Präparation abgehoben werden können. Bei Verwendung einer einzigen Drahtschlaufe, die an beiden Seiten der zu entfernenden Krone bzw. an den Plättchen angreift, wird erreicht, dass die Zugkraft beim Abziehen der Krone regelmässig verteilt auf die Krone einwirkt und so ein Verkanten und allenfalls dadurch ein Beschädigen der Präparation vermieden werden kann. Die Lage der Plättchen an den beiden Zahnseiten muss folglich nicht symmetrisch sein.
Je nach Ausbildung der zu entfernenden Krone können unterschiedliche Plättchen verwendet werden, deren Grundform bereits in etwa der Oberfläche der zu entfernenden Krone entsprechen. Auf diese Weise muss nur eine sehr geringe Klebermenge auf die Plättchen aufgebracht werden, um diese ganzflächig mit der Oberfläche der Zahnkrone zu verbinden. Je weniger Kleber verwendet werden muss, umso schneller und sicherer kann die Verbindung zwischen der Zahnkrone und den Plättchen mittels der UV-Lichtquelle ausgehärtet werden.

Anhand illustrierter Ausführungsbeispiele wird die Erfindung näher erläutert. Es zeigen:
- Fig. 1: eine schematische Darstellung einer Zahnreihe im Oberkiefer mit vier Zähnen, wobei an einer Zahnkrone seitlich je ein Plättchen aufgeklebt ist und ein Drahtverankerungsgehäuse mit einem Abziehdraht,
- Fig. 2: eine Seitenansicht der Zahnkrone in Figur 1 mit den beiden Plättchen,
- Fig. 3.: eine Seitenansicht von Zahnkronen in Figur 1 mit Blick auf das eine Plättchen,
- Fig. 4: eine weitere Ausgestaltung der Plättchen,
- Fig. 5: eine weitere Ausgestaltung der Plättchen,
- Fig. 6: eine weitere Ausgestaltung der Plättchen,
- Fig. 7: eine weitere Ausgestaltung der Plättchen,
- Fig. 8: ein scheibenförmiges Plättchen mit einer rillenförmigen Drahtaufnahme in perspektivischer Darstellung,
- Fig. 9: einen Horizontalschnitt längs Linie IX-IX in Figur 10,
- Fig. 10: einen Querschnitt durch eine Zahnkrone mit angeklebten scheibenförmigen Plättchen,
- Fig. 11: einen Querschnitt durch eine Zahnkrone mit angeklebten Plättchen und
- Fig. 12: eine Zahnkrone mit aufgesetzter UV-Lichtquelle
In Figur 1 sind schematisch vier Zähne A, B, C und D unter Weglassung des Zahnfleischansatzes im Oberkiefer dargestellt. Der Zahn C wird von einer künstlichen Zahnkrone aus Metall oder Porzellan gebildet. Die Zahnkrone ist mittels eines Zementes auf die Präparation, z.B. einem Rest des früheren Zahnes, aufgesetzt. Die Präparation ist in Figur 1 der besseren Übersichtlichkeit halber nicht dargestellt.
Auf der Innenseite und auf der Aussenseite der Zahnkrone, im folgenden kurz Krone 1 bezeichnet, ist je ein Halteplättchen, im folgenden kurz Plättchen 3, befestigt. Die beiden Plättchen 3 liegen einander ungefähr gegenüber. Die Befestigung des Plättchens 3 auf der Oberfläche der Krone 1 erfolgt durch einen Kleber 5, der in sehr kurzer Zeit ausgehärtet werden kann und unempfindlich ist gegen schlagartige Belastung. Als Kleber kann ein UV-härtendes Material oder allenfalls ein sogenannter Sekundenkleber eingesetzt werden. Der Kleber 5 soll die Eigenschaft aufweisen, dass er zum einen sehr rasch ausgehärtet werden kann, um die Verbindung herzustellen. Zum anderen soll er durch ein Lösungsmittel nach dem Entfernen der Krone 1 rückstandsfrei von der Krone 1 und, wenn möglich, dem Plättchen 3 abgelöst werden können. Als Kleber kann beispielsweise "Penlock GTI" von der Fa. Panacol in Zürich und als Lösungsmittel Aceton verwendet werden.

Je nach äusserer Gestalt der abzuziehenden Krone 1 ist die Fläche 7 am Plättchen 3, welche auf die Oberfläche der Krone 1 aufzuliegen kommt, an deren Topographie angeglichen, so dass nur eine, wenn möglich sehr dünne Kleberschicht aufgetragen werden muss, um eine ganzflächige Berührung auf der Zahnoberfläche zu gewährleisten.

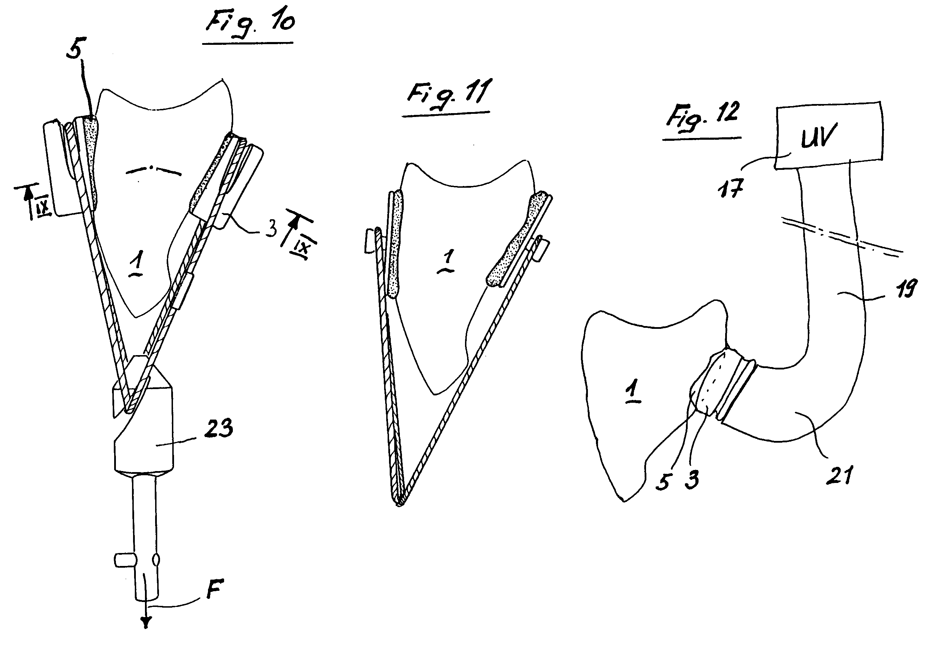

Das Plättchen 3 kann zylindrisch (Fig. 10), scheibenförmig (Figur 11), gebogen (Figur 4 bis 7) oder, wie in den Figuren 1 bis 3 dargestellt, kegelstumpfförmig ausgebildet sein. In der Mantelfläche der zäpfchenförmigen Plättchen 3 sind zum Einlegen eines Zugkabels, kurz Kabel 9, Rillen 11 eingelassen. Die Rillen 11 können umlaufend sein (Fig. 1-3 sowie 8 und 9) oder auch nur einen Teil des Mantels des Plättchens 3 erfassen.

In der Ausgestaltung gemäss den Figuren 4 bis 7 und 11 sind die Plättchen 3 als dünne, gebogene Scheiben 103 ausgebildet. Der Biegeradius der auf der Krone 101 aufzuliegen kommenden inneren Fläche ist wiederum, wie in den erstgenannten Beispielen, der jeweiligen äusseren Kontur der Krone 101 angeglichen. Sie lässt sich, falls nötig, durch den Zahnarzt leicht mit einer Zange weiter verformen.

In den Ausgestaltungen der Erfindung gemäss den Figuren 4 und 6 sind auf der Oberfläche der Plättchen 103 Wulste mit Köpfen (Fig. 4) oder Haken 115 (Fig. 6) zum Einhängen des Kabels 109 befestigt. In der Ausgestaltung der erfindungsgemässen Plättchen 103 in den Figuren 5 und 7 sind die Enden des Kabels 109 direkt mit der Oberfläche der Plättchen 103 verbunden, z.B. verschweisst. In der Figur 7 besteht das Kabel 109 aus einem Federbügel oder -draht, der die Plättchen 103 während der Belichtung zur Härtung des Klebers 5 auf die Zahnoberfläche angedrückt hält. Dies erleichtert deren Befestigung.

Die Plättchen 3,103 können aus Kunststoff, z.B. Polykarbonat, Metall oder einem anderen Werkstoff, hergestellt sein. Polykarbonat-Plättchen haben den Vorteil, dass sie lichtdurchlässig sind und daher eine Aushärtung eines Klebers aus UV-härtendem Material durch Belichtung durch das Plättchen hindurch ermöglichen. Die Aushärtezeit liegt dabei im Bereich von weniger als einer Minute. Dies ermöglicht eine einfache unproblematische Befestigung der Plättchen und folglich nur einen kurzzeitigen Einsatz der UV-Lichtquelle innerhalb des Mundes des Patienten. Wird ein Zweikomponenten-Kleber verwendet, der nicht durch UV-Licht härtbar ist, oder ein Sekundenkleber, so dauert die Aushärtung etwas länger. Das Plättchen muss folglich auch länger auf die Oberfläche der zu entfernenden Krone aufgepresst werden. Dazu bietet sich u.a. die Ausführung nach Figur 7 an.

Zur Aushärtung eines UV-härtenden Klebers, der auf einem Plättchen 3,103 aus Polykarbonat aufgebracht worden ist, kann beispielsweise gemäss Figur 12 eine UV-Lichtquelle 17 über einen optischen Lichtleiter 19 mit der Oberfläche des Plättchens 3 verbunden werden. Der optische Lichtleiter 19 ist vorzugsweise mit einem abgebogenen Ende 21 versehen, so dass die Lichtstrahlen senkrecht auf die Oberfläche des Plättchens 3 auftreffen, diese durchdringen und den zwischen der Oberfläche der Krone 1 und der Unterseite des Plättchens 3 befindliche Kleber 5 ebenfalls durchdringen und damit aushärten.
Der optische Lichtleiter 19 ist vorzugsweise am Ende eines flexiblen Lichtleiterbündels befestigt, so dass die Handhabung für den Zahnarzt sehr einfach ist und zudem die UV-Lichtquelle an günstiger Stelle placiert werden kann. Es können selbstverständlich auch anders ausgebildete Lichtleiter eingesetzt werden.

Das Abziehen einer Krone 1,101 wird im folgenden näher erläutert. Der Zahnarzt oder Zahntechniker legt das durch eine Presshülse 13 oder auf andere Weise zu einer endlosen Schlaufe verbundene Kabel 9 in die Rillen 11 der beiden Halteplättchen 3, bzw. er legt das Kabel 9 über die Bolzen bzw. Haken 115, dann erfasst er die so gebildete Doppelschlaufe und legt sie in ein Kabelführungsgehäuse 23, das er auf das Ende seines Hirtenstabes aufgesetzt hat, ein. Der Hirtenstab ist nicht dargestellt; er kann eine Ausbildung aufweisen, wie sie in der EP-A1-471648 in Figur 3 dargestellt ist. Ein solches Instrument gehört zum Handwerkszeug eines jeden Zahnarztes oder Zahntechnikers. Anstelle eines Hirtenstabes, mit dem eine schlagartige Kraft erzeugt wird, kann die Doppelschlaufe des Kabels 9,109 auch mit einem Haken erfasst werden. Instrumente mit einem Haken sind ebenfalls Teil des Instrumentariums eines jeden Zahnarztes oder Zahntechnikers. Der Haken kann auch an einem Hirtenstab befestigt sein.

Selbstverständlich kann das Kabel 9,109 bereits vor dessen Verbindung mit den Plättchen 3,103 in das Kabelführungsgehäuse 23 eingelegt werden. Die Reihenfolge ist hier dem Zahnarzt überlassen.

Dank der flexiblen Ausbildung des Zugkabels 9,109 und der losen Verbindung mit dem Haken oder dem Kabelführungsgehäuse 23 verteilt sich beim Ziehen in Richtung F die Zugkraft regelmässig auf die beiden Plättchen 9,109, auch wenn die Zugrichtung F nicht exakt in einer Achse erfolgt, die senkrecht zur Verbindungsachse der beiden Plättchen 3,103 liegt, oder wenn die beiden Plättchen 3,103 infolge der Topographie der Zahnkrone nicht genau einander gegenüberliegend an letzterer angeklebt sind.

Eine regelmässige Verteilung der Zugkraft ergibt sich auch in den Ausgestaltungen der Figuren 5-7, weil auch dort das Zugkabel 109 im Kabelführungsgehäuse 23 bzw. im Haken gleiten kann.

Nach der Entfernung der Krone 1,101 von der Präparation kann diese in eine den Kleber 9 lösende Flüssigkeit eingelegt werden und so die Plättchen 3 von der Oberfläche der Krone 1 rückstandsfrei abgelöst werden. Die von der Präparation entfernte Krone 1,101 lässt sich dadurch wieder verwenden.

Das beschriebene Verfahren und die Vorrichtung können selbstverständlich auch für die Entfernung von Zahnkronenbrücken eingesetzt werden.

## Patentansprüche

1. Verfahren zum zerstörungsfreien Abziehen und Entfernen von Zahnkronen von der sie tragenden Präparation mit einem an einem Abziehinstrument befestigbaren elastischen Kabel oder Draht, dadurch gekennzeichnet, dass
- seitlich an der abzuziehenden Zahnkrone (1,101) zwei Halteplättchen (3,103) einander gegenüberliegend angeklebt werden,
- eine flexible Verbindung zwischen den beiden Plättchen (3,103) und dem Abziehinstrument (23) erstellt wird und
- unter Anwendung einer Zugkraft (F) die Zahnkrone (1,101) von der Präparation abgezogen wird.

2. Verfahren nach Anspruch 1, dadurch gekennzeichnet, dass die Plättchen (3,103) mit einem schnellhärtenden Kleber (5,105) auf der Oberfläche der Zahnkrone (1,101) befestigt werden.

3. Verfahren nach Anspruch 2, dadurch gekennzeichnet, dass die Plättchen (3,103) aus lichtdurchlässigem Material bestehen und der Kleber (5,105) mit dem Licht aus einem auf das Plättchen (3,103) aufgesetzten, mit einer Lichtquelle (17) verbundenen optischen Lichtleiter (19) ausgehärtet werden.

4. Verfahren nach einem der Ansprüche 2 oder 3, dadurch gekennzeichnet, dass die Plättchen (3,103) und der Kleber (5,105) nach dem Abziehen der Krone (1,101) mit einem Lösungsmittel ohne Beschädigung der Krone (1,101) von letzterer ablösbar sind.

5. Vorrichtung zum zerstörungsfreien Abziehen und Entfernen von Zahnkronen von einer die Zahnkrone tragenden Präparation mit einem an einem Abziehinstrument befestigbaren Zugkabel, gekennzeichnet durch zwei Plättchen (3,103) zum seitlichen Aufkleben auf die Zahnkronenoberflächen, Einhängemitteln an den Plättchen (3,103) zum Verbinden der Plättchen (3,103) mit dem Zugkabel (9,109) und einem Führungsmittel (23) zum flexiblen Führen des Zugkabels (9,109) an einem Abzuginstrument.

6. Vorrichtung nach Anspruch 5, dadurch gekennzeichnet, dass die Plättchen (3,103) auf der der Zahnkronenoberfläche zugekehrten Seite eine an die Kontur (Topographie) der Zahnkronenoberfläche angeglichene oder angleichbare Gestalt aufweisen.

7. Vorrichtung nach einem der Ansprüche 5 oder 6, dadurch gekennzeichnet, dass die Plättchen (3) eine zylindrische oder kegelstumpfförmige Gestalt aufweisen und als Einhängemittel in deren Mantelflächen ganz oder teilweise umlaufende Rillen (11) zum Einlegen des Zugkabels (9) angebracht sind, oder dass die Plättchen (103) eine scheibenförmige Gestalt aufweisen und als Einhängemittel daran Bolzen oder Haken (115) befestigt sind.

8. Vorrichtung nach einem der Ansprüche 5 bis 7, dadurch gekennzeichnet, dass das Zugkabel (9,109) als eine endlose Schlaufe oder endlich mit zwei als Schlaufen ausgestalteten, an den Plättchen (3,103) einhängbaren Enden (125) ausgesbildet ist, oder dass das Zugkabel (109) als Federbügel ausgestaltet ist, mit dem die Plättchen (109) an die Zahnoberfläche anpressbar sind.

9. Vorrichtung nach einem der Ansprüche 5 bis 8, dadurch gekennzeichnet, dass die Plättchen (3,103) aus einem lichtdurchlässigen Kunststoffmaterial hergestellt sind, das zur Aushärtung eines mit Licht härtbaren Klebers (5,105) mit der Oberfläche der Zahnkrone (1,101) verbindbar ist.

10. Vorrichtung nach einem der Ansprüche 5 bis 9, dadurch gekennzeichnet, dass das endlose schlaufenförmige Zugkabel (9) oder das endlich ausgebildete, mit den Plättchen (3,103) verbundene Zugkabel (109) frei gleitend in einem Führungsmittel (23) des Zuginstrumentes gehalten ist.
